# EUROPEAN PATENT SPECIFICATION

(11) **EP 3 096 440 B1**
(45) Date of publication and mention of the grant of the patent: **11.12.2019**
(21) Application number: 16169960.8
(22) Date of filing: 17.05.2016
(51) Int. Cl.: H02K 3/14, H02K 15/02, H02K 15/04, H01B 13/02

(54) **MANUFACTURING METHOD OF COATED CONDUCTING WIRE ASSEMBLY**
HERSTELLUNGSVERFAHREN FÜR BESCHICHTETE LEITERDRAHTANORDNUNG
PROCÉDÉ DE FABRICATION D'UN ENSEMBLE DE FIL CONDUCTEUR REVÊTU

(30) Priority: 18.05.2015 JP 2015100919
(43) Date of publication of application: 23.11.2016
(73) Proprietor: Toyota Jidosha Kabushiki Kaisha, Toyota-shi, Aichi 471-8571 (JP)
(72) Inventor: HIRAO, Yasuyuki, Toyota-shi,, Aichi 471-8571 (JP); MANABE, Hideki, Toyota-shi,, Aichi 471-8571 (JP)
(74) Representative: TBK

(56) References cited:
- EP-A2- 0 148 447
- EP-A2- 1 221 703
- WO-A1-2014/170739
- WO-A2-2015/056077
- JP-A- 2009 199 749
- JP-A- 2015 050 083

## Description

### BACKGROUND OF THE INVENTION

### 1. Field of the Invention

The invention relates to a manufacturing method of a coated conducting wire assembly.

### 2. Description of Related Art

A coated conducting wire assembly that is covered by an insulation coating having electrical insulation properties is known. For example, JP 2009-199749 A describes one method of forming such a conducting wire assembly by first bundling a plurality of conducting wires together to form a conducting wire bundle, twisting the formed conducting wire bundle, and then covering it with a coating. WO 2015/056077 A2 describes another method having the features set forth in the preamble of claim 1.

### SUMMARY OF THE INVENTION

In the process of covering the conducting wire bundle with the coating, twisting deformation may occur in a conducting wire assembly due to the conducting wire assembly being heated while tension is applied it.

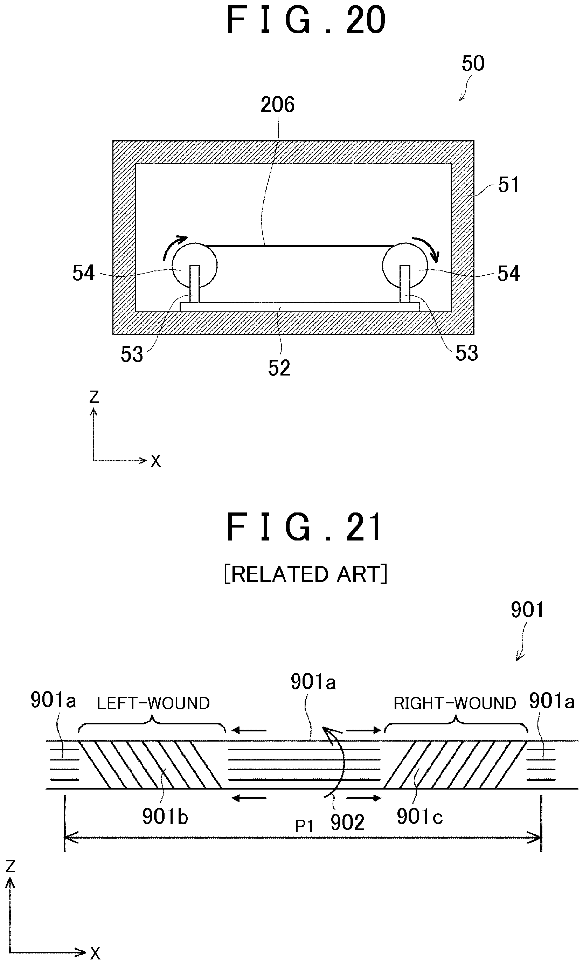

For example, as shown in FIG. 21 forming part of the related art, a conducting wire assembly 901 is formed by twisting a bundled conducting wire bundle, not shown. This conducting wire assembly 901 has a left-wound portion 901b that is twisted around an axis of the conducting wire assembly 901, a parallel portion 901a that extends straight in the axial direction, and a right-wound portion 901c that is twisted in the opposite direction from the left-wound portion 901b. Untwisting deformation occurs in the conducting wire assembly 901 in a process to cover the conducting wire assembly 901 with a coating, and the like. Untwisting deformation is twisting deformation in which the left-wound portion 901b and the right-wound portion 901c loosen, or more specifically, in which the conducting wire bundle is twisted in a rotational direction 902 that is opposite the rotational direction in which the conducting wire bundle is twisted. This twisting deformation causes the parallel portion 901a to expand, and the left-wound portion 901b and the right-wound portion 901c to decrease.

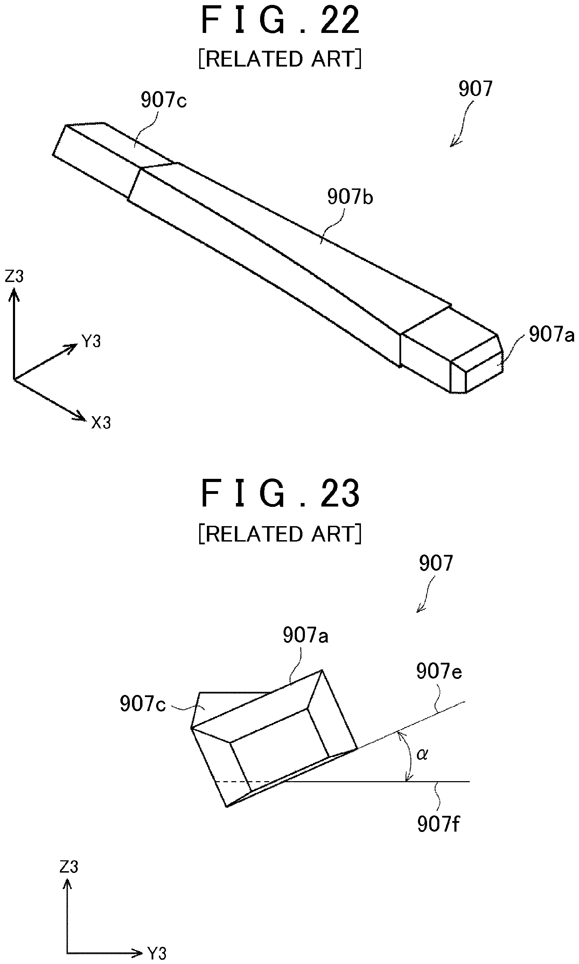

When such untwisting deformation occurs, one end portion 907a of a coated conducting wire assembly 907 may twist-deform with respect to the other end portion 907c of the coated conducting wire assembly 907, as shown in FIG. 22 forming part of the prior art, for example. Also, a twisting angle α formed by the intersection of a side surface 907e of the one end portion 907a and a side surface 907f of the other end portion 907c may reach a size that is undesirable for the coated conducting wire assembly, as shown in FIG. 23 forming part of the related art. In FIGS. 22 and 23, the coated conducting wire assembly 907 is shown as a single conducting wire to facilitate understanding.

Furthermore, the inventors of this application conceived of annealing the coated conducting wire assembly described above to a predetermined temperature, and then maintaining this temperature for a predetermined period of time. This kind of annealing ensures the necessary adhesion strength between the conducting wire assembly and the coating. However, annealing may also end up causing further twisting deformation in the coated conducting wire assembly. It is noted that EP 0 148 447 A2 uses annealing for removing residual stress from a twisted profile strand.

The invention thus provides a manufacturing method of a coated conducting wire assembly that corrects twisting deformation.

According to the invention, a manufacturing method of a coated conducting wire is provided as defined in claim 1. An aspect of the invention relates to a manufacturing method of a coated conducting wire assembly that includes forming a conducting wire assembly by twist-deforming a conducting wire bundle, forming a coated conducting wire assembly by covering the conducting wire assembly with an insulation coating, and annealing the coated conducting wire assembly. The conducting wire bundle is formed by bundling a plurality of conducting wires. The conducting wire assembly includes a parallel portion, a left-wound portion, and a right-wound portion. The annealing is heating and holding the coated conducting wire assembly at an annealing temperature, while applying tension to the covered conducting wire assembly.

The adhesion strength between the coating and the conducting wire assembly is increased while inhibiting twisting of the conducting wire assembly, so a coated conducting wire assembly in which twisting deformation is corrected is able to be manufactured.

In the aspect described above, the coated conducting wire assembly may include a conducting portion where the conducting wire assembly is exposed, on both ends. The annealing may include heating the coated conducting wire assembly to raise a temperature of the coated conducting wire assembly to the annealing temperature, and the heating may be performed by direct resistance heating by supplying a current to the conducting portion of the coated conducting wire assembly.

According to this aspect, when heating is performed from outside the coated conducting wire assembly, the insulation coating acts as thermal insulating material, so heat is not easily transmitted to the contact portion between the conducting wire assembly and the insulation coating. However, the temperature of the coated conducting wire assembly is able to be raised to the annealing temperature in a short period of time by generating Joule heat inside the conducting wire assembly of the coated conducting wire assembly. Therefore, a coated conducting wire assembly in which twisting deformation has been corrected is able to be manufactured with high productivity.

In the aspect described above, the annealing may include applying tension to the coated conducting wire assembly, while both end portions of the coated conducting wire assembly are fixed such that an angle of twist from untwisting deformation becomes substantially zero. The untwisting deformation is caused by return deformation that occurs as the coated conducting wire assembly is formed.

According to this aspect, tension is applied while further inhibiting twisting of the coated conducting wire assembly, so a coated conducting wire assembly in which twisting deformation is even more reliably corrected is able to be manufactured.

In the aspect described above, the coated conducting wire assembly may be shortened by cutting the coated conducting wire assembly before the annealing.

According to this aspect, the coated conducting wire assembly is easier to maneuver because it is shorter. Therefore, heating treatment is able to be performed for each shortened coated conducting wire assembly, so the heating apparatus or the like such is able to be smaller. Also, tension is applied individually to the shortened coated conducting wire assemblies, so the applied tension is able to be reduced. Therefore, the device that applies the tension is able to be smaller.

The invention is thus able to provide a manufacturing method of a coated conducting wire assembly that corrects twisting deformation.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a flowchart illustrating a manufacturing method of a coated conducting wire assembly according to a first example embodiment of the invention;
FIG. 2 is a view showing a plurality of steps in the manufacturing method of the coated conducting wire assembly according to the first example embodiment;
FIG. 3 is a view showing the conducting wire assembly in one of the steps in the manufacturing method of the coated conducting wire assembly according to the first example embodiment;
FIG. 4 is a view showing the plurality of steps in the manufacturing method of the coated conducting wire assembly according to the first example embodiment;
FIG. 5 is a view showing one of the steps in the manufacturing method of the coated conducting wire assembly according to the first example embodiment;
FIG. 6 is a view showing one of the steps in the manufacturing method of the coated conducting wire assembly according to the first example embodiment;
FIG. 7 is a view showing one of the steps in the manufacturing method of the coated conducting wire assembly according to the first example embodiment;
FIG. 8 is a view showing one of the steps in the manufacturing method of the coated conducting wire assembly according to the first example embodiment;
FIG. 9 is a flowchart illustrating steps in the manufacturing method of the coated conducting wire assembly according to the first example embodiment;
FIG. 10 is a perspective view of a clamp unit used in the manufacturing method of the coated conducting wire assembly according to the first example embodiment;
FIG. 11 is a front view of the clamp unit used in the manufacturing method of the coated conducting wire assembly according to the first example embodiment;
FIG. 12 is a view showing one of the steps in the manufacturing method of the coated conducting wire assembly according to the first example embodiment;
FIG. 13 is a view showing one example of a conducting wire assembly manufactured using the manufacturing method of the coated conducting wire assembly according to the first example embodiment;
FIG. 14 is a view showing one example of a conducting wire assembly manufactured using the manufacturing method of the coated conducting wire assembly according to the first example embodiment;
FIG. 15 is a flowchart illustrating steps in a manufacturing method of a coated conducting wire assembly according to a second example embodiment of the invention;
FIG. 16 is a front view of a clamp unit used in one of the steps in the manufacturing method of the coated conducting wire assembly according to the second example embodiment;
FIG. 17 is a flowchart illustrating one of the steps in the manufacturing method of the coated conducting wire assembly according to the second example embodiment;
FIG. 18 is a graph showing a twisting angle with respect to a measurement position;
FIG. 19 is a graph showing the temperature with respect to heating time;
FIG. 20 is a view showing another step of the manufacturing method of the coated conducting wire assembly according to the first example embodiment;
FIG. 21 is a view showing a conducting wire assembly manufactured using a related manufacturing method of a coated conducting wire assembly;
FIG. 22 is a view of an example of a conducting wire assembly manufactured using a related manufacturing method of a coated conducting wire assembly; and
FIG. 23 is another view of the example of the conducting wire assembly manufactured using the related manufacturing method of a coated conducting wire assembly.

### DETAILED DESCRIPTION OF EMBODIMENTS

### First example embodiment

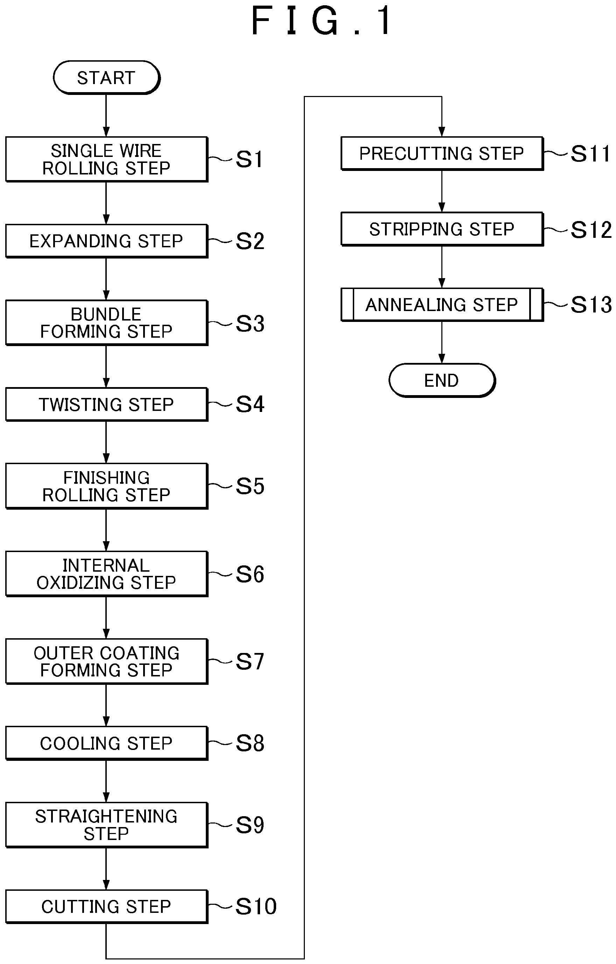

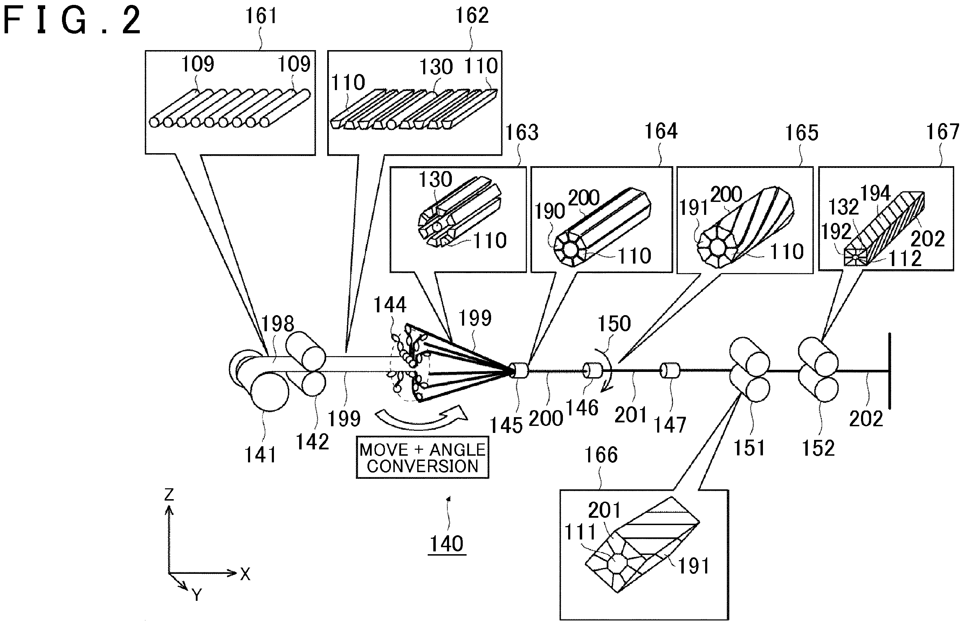

A manufacturing method of a coated conducting wire assembly according to a first example embodiment of the invention will now be described with reference to FIGS. 1 to 14. FIG. 1 is a flowchart illustrating the manufacturing method of a coated conducting wire assembly according to the first example embodiment. FIG. 2 is a view showing a plurality of steps in the manufacturing method of a coated conducting wire assembly according to the first example embodiment. First, the plurality of steps to continuously manufacture an assembly conductor 202 from a conducting wire group 198 using a manufacturing apparatus 140 will be described. In FIG. 2, the conducting wire group 198 is shown with conducting wires 109 lined up in a direction from the back to the front of the paper on which FIG. 2 is drawn (i.e., in a Y direction in this case).

As shown in FIG. 2, a wire feeder 141 feeds the conducting wire group 198 into a first pressure roller 142. As shown in frame 161, the conducting wires 109 are linear bodies that have generally circular cross-sectional shapes. The conducting wires 109 make up a portion of the conducting wire group 198 that form peripheral wires 110. The conducting wires 109 are made of material that conducts electricity, e.g., pure copper or a copper alloy.

The first pressure roller 142 receives the conducting wire group 198 from the wire feeder 141, and plastically deforms the conducting wires 109 of the conducting wire group 198 as shown in frame 162 to form the peripheral wires 110 (single wire rolling step S1). Here, the cross-sectional shape of the peripheral wires 110 may be deformed from a circular shape having isotropy in which the cross-sectional shape does not change when the peripheral wires 110 are rotated, to an anisotropic cross-sectional shape having anisotropy in which the cross-sectional shape changes when the peripheral wires 110 are rotated, e.g., deformed to a trapezoidal shape in which the lengths of an upper base and a lower base are different. Examples of an anisotropic cross-sectional shape include a trapezoidal shape, a fan shape, an arc shape, and a triangular shape, and the like. Also, the wires inside a wire group 199 formed by the peripheral wires 110 and a core wire 130 are arranged in a straight line. That is, the wires of the wire group 199 are arranged lined up in a line in a direction (the Y direction here) perpendicular to the feeding direction of the wire group 199 (i.e., the long direction (the X direction here) of the wires in the wire group 199). More specifically, the peripheral wires 110 are arranged such that surfaces corresponding to the upper bases of the trapezoidal shapes are arranged alternately with surfaces corresponding to the lower bases of the trapezoidal shapes.

The first pressure roller 142 has a pair of rollers, and is rotated by a driving mechanism, not shown, and feeds the wire group 199 to a transport device 144. The wire group 199 is shown with the wires lined up in a straight line in a direction from the back to the front of the paper on which FIG. 2 is drawn.

The transport device 144 receives the wire group 199 from the first pressure roller 142. The transport device 144 expands the wires of the wire group 199 to create a positional relationship in which the peripheral wires 110 surround the core wire 130. More specifically, as shown in frame 163, the peripheral wires 110 are arranged in a radial shape centered around the core wire 130 (expanding step S2). At this time, the peripheral wires 110 are arranged such that the area of the outer peripheral surfaces is wider than the area of the inner peripheral surfaces. That is, in a cross-section of the peripheral wires 110, the longer the two bases, i.e., the upper base and the lower base, of the trapezoidal shape, is arranged on the outside and the shorter of the two bases is arranged on the inside.

Also, the transport device 144 aligns the position and orientation of the peripheral wires 110 such that the inner peripheral surfaces of the peripheral wires 110 face the sides of the core wire 130. That is, the inner peripheral surfaces of the peripheral wires 110 must follow the outer peripheral surface of the circular cylindrical shape, so the peripheral wires 110 must be arranged converting an angle such that the wire group 199 that has been transported with the surface that includes the upper base and the surface that includes the lower base of each peripheral wire 110 parallel to each other, becomes perpendicular to a virtual line that extends radially outward from the core wire 130. The transport device 144 feeds the wire group 199 to a clamp 145.

Continuing on, the clamp 145 receives the wire group 199 from the transport device 144. The clamp 145 aligns the wire group 199, and arranges the peripheral wires 110 around the core wire 130 to form a bundled wire assembly, i.e., a wire assembly bundle 200 (bundle forming step S3). Also, the clamp 145 forms the wire assembly bundle 200 such that the inner peripheral surfaces of the peripheral wires 110 face the sides of the outer surface of the core wire 130.

The clamp 145 applies a predetermined pressure to a wire assembly bundle 200, in a direction toward the center of the wire assembly bundle 200. Therefore, as shown in frame 164, the core wire 130 and the peripheral wires 110 are brought close together, and the peripheral wires 110 are brought close to each other, in a cross-section 190 of the wire assembly bundle 200. The wire assembly bundle 200 passes through the clamp 145 and a rotator 146, and is then fed to a clamp 147.

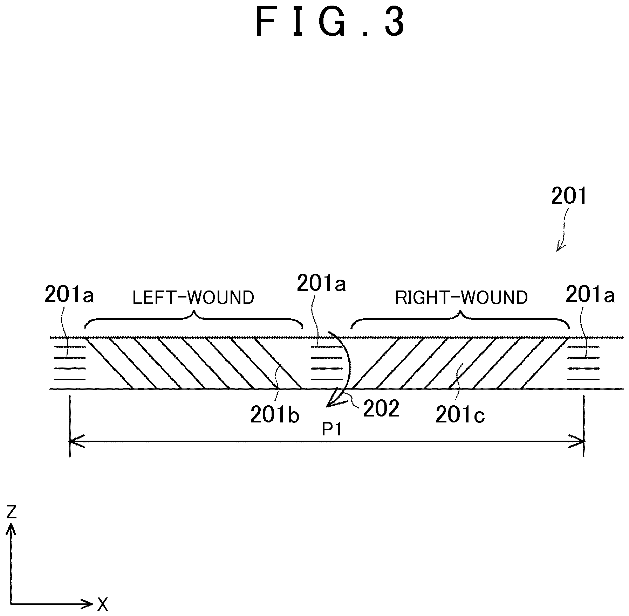

The clamp 145, the rotator 146, and the clamp 147 clamp the wire assembly bundle 200 and fix the axis of the wire assembly bundle 200. Moreover, the rotator 146 rotates in a predetermined rotational direction 150 and twists the wire assembly bundle 200 (twisting step S4), while the clamp 145, the rotator 146, and the clamp 147 remain clamping the wire assembly bundle 200. As a result, a twisted assembly conductor 201 is formed. Here, the twisted assembly conductor 201 has a twisted portion that is twisted in a spiral around the core wire 130, and a reverse twisted portion that is twisted in the opposite direction from the twisting direction of the twisted portion, with the rotator 146 as the boundary between the two portions. The twisted assembly conductor 201 may also have a non-twisted portion that runs parallel to the axis of the core wire 130, between the twisted portion and the reverse twisted portion. More specifically, the twisted assembly conductor 201 has a parallel portion 201a, a left-wound portion 201b, and a right-wound portion 201c, as shown in FIG. 3. FIG. 3 is a view showing the conducting wire assembly in one step of the manufacturing method of the coated conducting wire assembly according to the first example embodiment. The parallel portion 201a, the left-wound portion 201b, and the right-wound portion 201c are arranged in order of the left-wound portion 201b, the parallel portion 201a, the right-wound portion 201c, and the parallel portion 201a, in the advancing direction of the twisted assembly conductor 201 (i.e., in the X direction here). The parallel portion 201a, the left-wound portion 201b, the parallel portion 201a, and the right-wound portion 201c, and the parallel portion 201a, are formed when the twisting step S4 is performed once. Here, the parallel portion 201a, the left-wound portion 201b, the parallel portion 201a, the right-wound portion 201c, and the parallel portion 201a equal 1P (pitch).

As shown in frame 165 in FIG. 2, the twisted assembly conductor 201 is an assembly conductor in which the core wire 130 and the peripheral wires 110 that have a predetermined shape are aligned. Therefore, the rotator 146 is able to form the cross-section 191 in which the generally circular shape of the cross-section 190 is maintained.

The clamp 147 applies a predetermined pressure to the twisted assembly conductor 201, in a direction toward the center of the twisted assembly conductor 201. Therefore, the core wire 130 is brought into close contact with the peripheral wires 110, and the peripheral wires 110 are brought into close contact with each other.

A second pressure roller 151 receives the twisted assembly conductor 201 from the clamp 147. This second pressure roller 151 has a pair of rollers, and is rotated by a driving mechanism, not shown, and essentially applies pressure in the vertical direction (the Z-axis direction here) in FIG. 2 when the twisted assembly conductor 201 has a generally flat shape. Furthermore, a third pressure roller 152 forms an outer wall surface 194 along a width direction (the Y-axis direction here) on upper and lower ends in FIG. 2 of the cross-section 192 of the assembly conductor 202, as shown in frame 167 (finishing rolling step S5). A wall surface along the vertical direction (the Z-axis direction here) may also be formed on left and right ends in FIG. 2, using at least one pair of pressure rollers, as necessary. The assembly conductor 202 has a core wire 132 and peripheral wires 112.

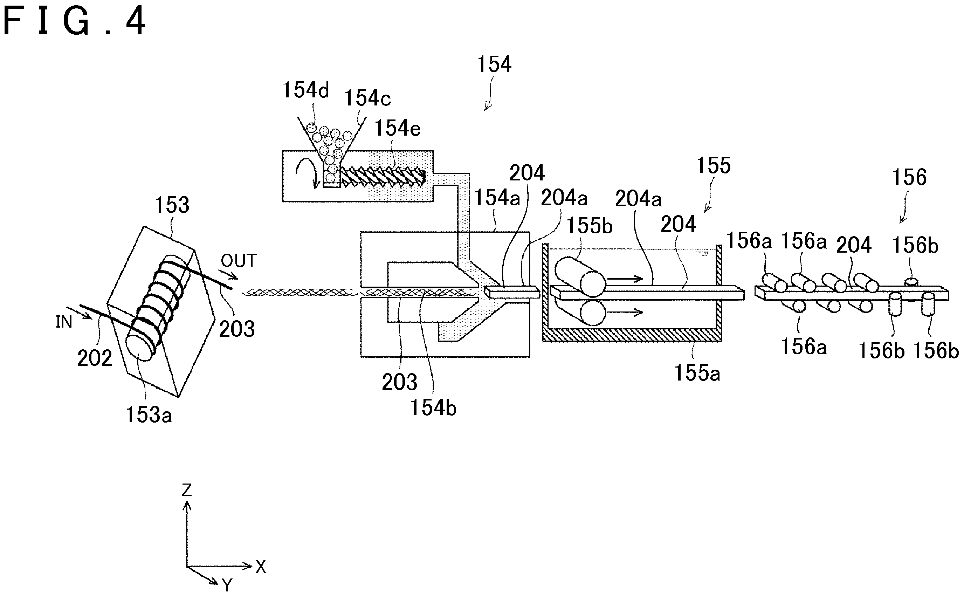

Continuing on, an oxidation furnace 153 receives the assembly conductor 202 from the third pressure roller 152 (see FIG. 2), as shown in FIG. 4. FIG. 4 is a view showing a plurality of steps in the manufacturing method of the coated conducting wire assembly according to the first example embodiment. An oxide film is formed inside the assembly conductor 202, i.e., between the core wire 132 (see FIG. 2) and the peripheral wires 112 (see FIG. 2), as well as between the peripheral wires 112, by heating the assembly conductor 202 to an internal oxidization temperature (internal oxidizing step S6). The assembly conductor 202 is wound on a winding roller 153a inside the oxidation furnace 153. This oxide film preferably electrically insulates the core wire 132 from the peripheral wires 112, as well as electrically insulates the peripheral wires 112 from each other. It is also preferable to apply an oxide film forming agent that forms an oxide film, before the internal oxidizing step S6.

Continuing on, an insulation coating 204a is coated onto an assembly conductor 203 to form an externally coated conducting wire assembly 204 (outer coating forming step S7). More specifically, an insulation coating applying device 154 receives the assembly conductor 203. The assembly conductor 203 is led to a die hole 154b of a drawing die 154a. The insulation coating applying device 154 softens powder-like raw material 154d filled into a hopper 154c by heating beforehand, and injects the raw material 154d into the die hole 154b of the drawing die 154a and applies further pressure using a screw 154e. Then the assembly conductor 203 is drawn toward the downstream side from the die hole 154b of the drawing die 154a. Thus, the externally coated conducting wire assembly 204 is drawn from the die hole 154b of the drawing die 154a, with the insulation coating 204a formed on an outer peripheral surface of the assembly conductor 203. It is by these steps that the externally coated conducting wire assembly 204 is manufactured.

Here, the insulation coating 204a is preferably made of material having electrical insulating properties. Some examples of such material are PFA (tetrafluoroethylene perfluoroalkyl vinyl ether copolymer), PEEK (polyether ether ketone), PPS (polyphenylene sulfide), and enamel and the like. Untwisting deformation or twisting deformation may occur in the externally coated conducting wire assembly 204 due to heating and tension being applied in the outer coating forming step S7.

Continuing on, the externally coated conducting wire assembly 204 is cooled to a predetermined temperature (cooling step S8). More specifically, first, a cooling apparatus 155 receives the externally coated conducting wire assembly 204. The cooling apparatus 155 has a tank 155a that holds cooling water, and a pair of rollers 155b provided in the tank 155a. The cooling apparatus 155 passes the externally coated conducting wire assembly 204 between the pair of rollers 155b. As a result, the externally coated conducting wire assembly 204 is immersed inside the tank 155a and is thus able to be cooled.

Continuing on, pressure is applied to the externally coated conducting wire assembly 204 to increase the straightness of the externally coated conducting wire assembly 204 (straightening step S9). More specifically, the externally coated conducting wire assembly 204 is fed to pairs of rollers 156a and 156b that are lined up in a direction substantially perpendicular to the axis of the externally coated conducting wire assembly 204. The pairs of rollers 156a and 156b each apply pressure to the externally coated conducting wire assembly 204. The direction in which this pressure is applied is a direction that is substantially perpendicular to the axis of the externally coated conducting wire assembly 204. The direction in which the pair of rollers 156a are lined up may also be substantially perpendicular to the direction in which the pair of rollers 156b are lined up.

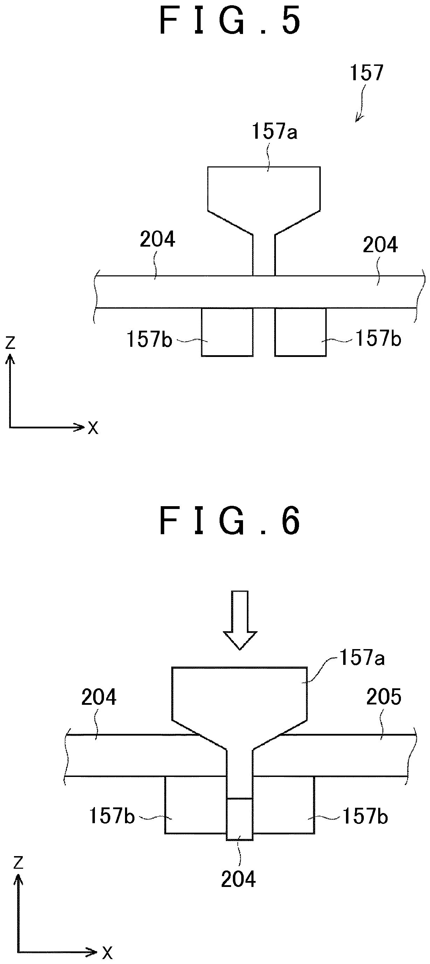

As shown in FIGS. 5 and 6, the externally coated conducting wire assembly 204 is cut using a press 157 (cutting step S10). FIGS. 5 to 8 are views showing steps in the manufacturing method of the coated conducting wire assembly according to the first example embodiment. More specifically, a die 157b is provided below the externally coated conducting wire assembly 204, and the externally coated conducting wire assembly 204 is cut shorter by lowering a punch 157a from above the externally coated conducting wire assembly 204. As a result, a short conducting wire assembly 205 is formed. The length of this short conducting wire assembly 205 may be determined according to the usage application of the coated conducting wire assembly that is the finished product of this manufacturing method. For example, when the usage application of the coated conducting wire assembly is a short coil for a motor, which will be described later, the length of the short conducting wire assembly 205 may be determined according to the length of the short coil. Also, the length of the short conducting wire assembly 205 may be determined according to the size of manufacturing equipment such as an annealing furnace 40 that will be described later, or a clamp unit 20 that will also described later.

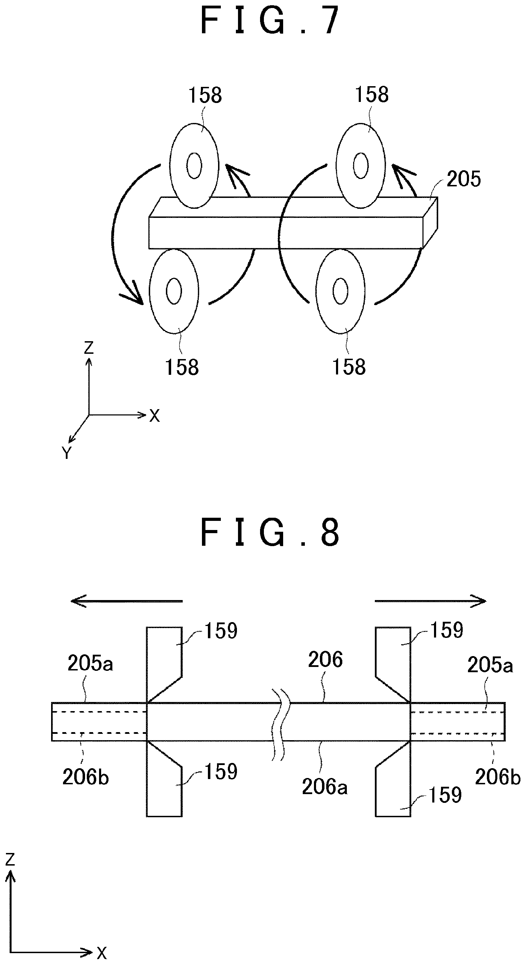

As shown in FIG. 7, both end portions of an outer coating 205a of the short conducting wire assembly 205 are cut using a disk-shaped cutter 158 (precutting step S11). While both end portions of the outer coating 205a are cut, conducting wire, not shown, of the short conducting wire assembly 205 is not cut, so the conducting wire, not shown, of the short conducting wire assembly 205 is not damaged.

Continuing on, both end portions of the outer coating 205a are stripped (i.e., removed) using a blade 159, such that a partially coated conducting wire assembly 206 is formed (stripping step S12), as shown in FIG. 8. More specifically, both end portions of the cut outer coating 205a are stripped by inserting the blade 159 into the outer coating 205a and moving the blade 159 toward the end side of the short conducting wire assembly 205. The partially coated conducting wire assembly 206 includes an insulation coating 206a, and a conducting wire assembly 206b that is covered by the insulation coating 206a. At least the center portion of the conducting wire assembly 206b is covered by the insulation coating 206a, and is thus electrically insulated. Both end portions (also referred to simply as "conducting portions") of the conducting wire assembly 206b are not covered by the insulation coating 206a and are thus exposed and able to conduct electricity.

Continuing on, the partially coated conducting wire assembly 206 is heated until it reaches an annealing temperature while tension is applied, and this temperature is then for a predetermined period of time (annealing step S13).

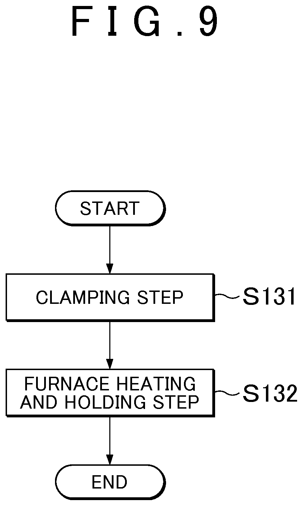

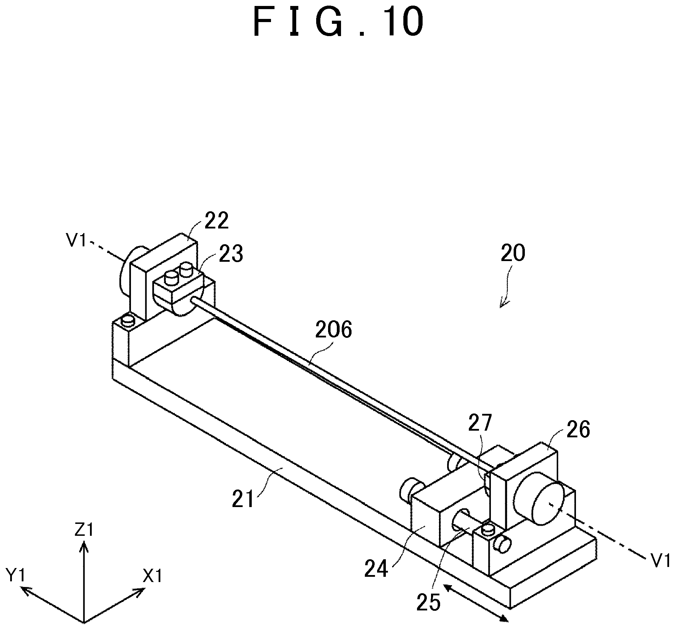

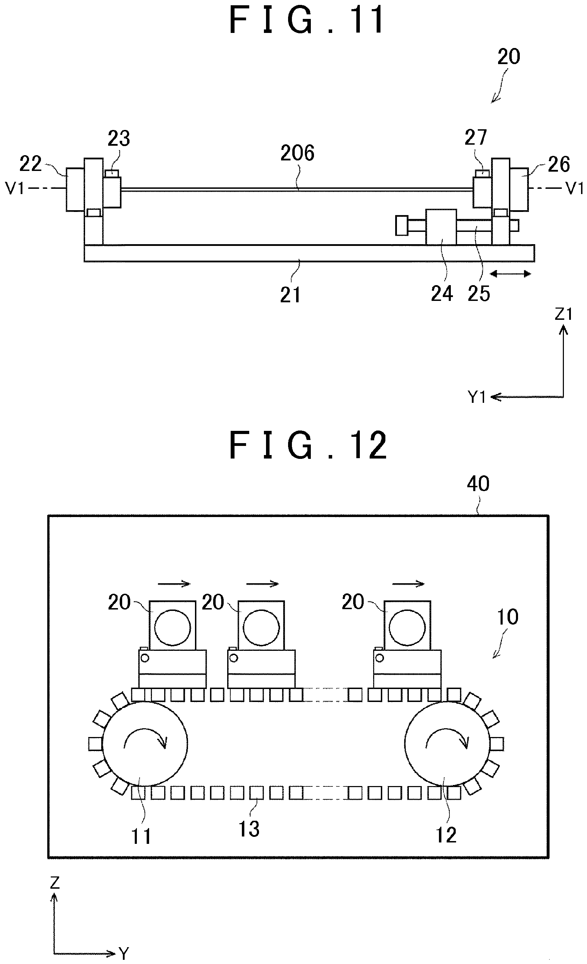

More specifically, while the partially coated conducting wire assembly 206 is clamped by the clamp unit 20, the partially coated conducting wire assembly 206 is put, clamp unit 20 and all, into the annealing furnace 40, then heated to a predetermined temperature and kept at this temperature for a predetermined period of time, as shown in FIGS. 10 to 12 with reference to FIG. 9. FIG. 9 is a flowchart illustrating steps in the manufacturing method of the coated conducting wire assembly according to the first example embodiment. FIG. 10 is a perspective view of the clamp unit used in the manufacturing method of the coated conducting wire assembly according to the first example embodiment. FIG. 11 is a front view of the clamp unit used in the manufacturing method of the coated conducting wire assembly according to the first example embodiment. FIG. 12 is a view showing a step in the manufacturing method of the coated conducting wire assembly according to the first example embodiment.

As shown in FIGS. 10 and 11, the clamp unit 20 includes a base 21, a clamp supporting portion 22, a clamp 23, a spring supporting portion 24, a rod 25, a clamp supporting portion 26, and a clamp 27. The base 21 is a rectangular plate-like body, and the clamp supporting portion 22 is a blockish body provided on one end of the base 21. The spring supporting portion 24 is a blockish body provided on the other end portion side of the base 21. The rod 25 is slidably inserted into the spring supporting portion 24 via a spring, not shown. The clamp supporting portion 26 is connected to the rod 25 on the other end side of the base 21, and is provided so as to be able to move on the other end of the base 21. The clamp 27 is supported by the clamp supporting portion 26.

The clamp 23 and the clamp 27 are arranged facing each other on the same virtual axis V1. When the clamp supporting portion 26 moves, the clamp 27 moves on the virtual axis V1. The virtual axis V1 may be substantially parallel to the long direction of the base 21. The clamp 23 and the clamp 27 are, to be more precise, fixing implements, e.g., chuck devices, that fix the partially coated conducting wire assembly 206 in a predetermined position by clamping it.

First, tension is applied to the partially coated conducting wire assembly 206 using the clamp unit 20 (clamping step S131). More specifically, the clamp unit 20 is able to clamp the partially coated conducting wire assembly 206 by clamping one end portion of the partially coated conducting wire assembly 206 with the clamp 23, while clamping the other end portion of the partially coated conducting wire assembly 206 with the clamp 27. Here, the rod 25 and the clamp supporting portion 26 are pushed on by the restoring force of the spring, and the clamp 27 is pushed in a direction away from the clamp 23. Therefore, tension is applied to at least extend the partially coated conducting wire assembly 206 straight on the virtual axis V1. The other end portion of the partially coated conducting wire assembly 206 may be kept from twisting, so as to correct untwisting deformation or twisting deformation that may occur in the outer coating forming step S7 and the like, with respect to the one end portion of the partially coated conducting wire assembly 206. Here, the phrase "kept from twisting" means that the twisting angle, i.e., the angle of the other end portion of the partially coated conducting wire assembly 206 with respect to the one end portion of the partially coated conducting wire assembly 206, is preferably substantially 0° (zero degrees).

Continuing on, annealing is performed by heating and holding the partially coated conducting wire assembly 206 (furnace heating and holding step S132). More specifically, as shown in FIG. 12, the clamp unit 20 that is clamping the partially coated conducting wire assembly 206 is placed on a conveyer 10 arranged inside the annealing furnace 40. A plurality of the clamp units 20 that are arranged such that the axes of the partially coated conducting wire assemblies 206 are along the width direction of the conveyer 10 may be lined up in the moving direction of the conveyer 10. The partially coated conducting wire assemblies 206 are arranged in a line. The annealing furnace 40 is able to heat an object to be heated that is arranged inside a furnace chamber, not shown, of the annealing furnace 40, by emitting infrared radiation or generating heated air, for example. After the partially coated conducting wire assembly 206 is heated to the annealing temperature by the annealing furnace 40, the conveyer 10 rotates rotating rollers 11 and 12 in the same direction to move a belt 13 while maintaining the annealing temperature. As a result, a plurality of the clamp units 20 are able to pass through the annealing furnace 40, so annealing is able to be applied continuously to the plurality of partially coated conducting wire assemblies 206. Because the partially coated conducting wire assemblies that have been shortened by the cutting step S10 are arranged in a line, annealing is able to be performed using the compact full length of the annealing furnace in the moving direction of the conveyer 10. Also, the adhesion strength between the insulation coating 206a and the conducting wire assembly 206b is able to be increased by annealing. Here, the partially coated conducting wire assembly 206 is shorter than the externally coated conducting wire assembly 204 (see FIGS. 4 to 6), so the partially coated conducting wire assembly 206 is easy to maneuver. Therefore, heating treatment is able to be performed for each partially coated conducting wire assembly 206, so the heating apparatus such as the annealing furnace 40 is able to be smaller. Also, tension is applied individually to the partially coated conducting wire assemblies 206, so the applied tension is able to be reduced. Therefore, the device that applies the tension, e.g., the clamp unit 20, is able to be smaller.

For example, the conducting wire assembly 206b may include copper wire made of copper or a copper alloy, and a copper oxide film made of copper oxide that covers this copper wire. In this case, when annealing is performed, the copper oxide film of the conducting wire assembly 206b and the insulation coating 206a that is made of resin into which LCP (liquid crystal polymer) has been blended are bonded by a hydrogen bond.

Also, the adhesion strength between the insulation coating 206a and the conducting wire assembly 206b is increased by heating and holding the partially coated conducting wire assembly 206, while inhibiting twisting by applying tension to the partially coated conducting wire assembly 206.

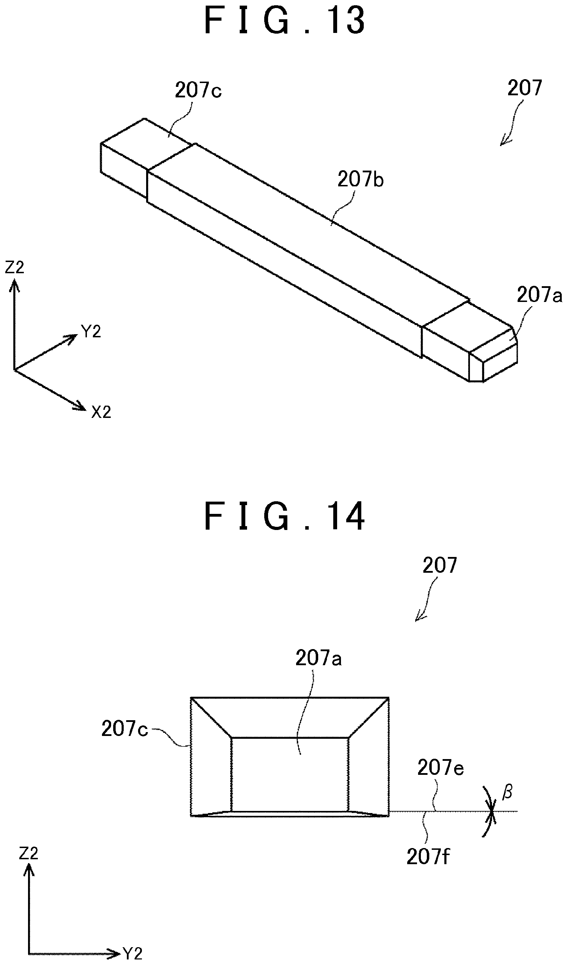

A conducting wire assembly 207 is obtained through these steps. As shown in FIG. 13, the conducting wire assembly 207 has one end portion 207a and another end portion 207c. FIGS. 13 and 14 are views showing one example of the conducting wire assembly manufactured using the manufacturing method of the coated conducting wire assembly according to the example embodiment. The one end portion 207a has a side surface 207e, and the another end portion 207c has a side surface 207f. In FIGS. 13 and 14, the conducting wire assembly 207 is shown as a single conducting wire in order to facilitate understanding. As shown in FIG. 14, a twisting angle β formed by the side surface 207e and the side surface 207f intersecting each other is smaller than an angle α (see FIG. 23), and falls within a range of a suitable value for the coated conducting wire assembly. That is, it is thought that any twisting deformation of the conducting wire assembly 207 that might occur in the outer coating forming step S7 is able to be corrected because the twisting angle of the conducting wire assembly 207 is small.

The manufacturing method of the coated conducting wire assembly according to the first example embodiment described above thus makes it possible to manufacture a coated conducting wire assembly in which twisting deformation is corrected.

A motor is able to be formed using the obtained conducting wire assembly 207. More specifically, after the conducting wire assembly has been cooled using an air blower, short coil wires, not shown, that are curved in a general U-shape or a general C-shape for example, are formed by press forming. Then, after being inserted into slots in a stator main body, the short coil wires are extended. The end portions of the short coil wires are welded together to form a coil. A motor, not shown, is then able to be formed by arranging the formed coil on, for example, a stator, and the like. For example, the twisting deformation of the conducting wire assembly 207 is small, so the conducting wire assembly 207 is able to be assembled to the stator main body or the like with good assembly accuracy. Therefore, a motor in which the conducting wire assembly is assembled with good accuracy is able to be manufactured. This kind of motor may be used mounted in a vehicle such as a hybrid vehicle or a robot, for example.

### Second example embodiment

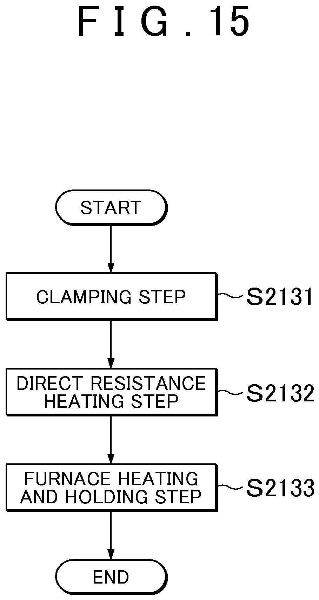

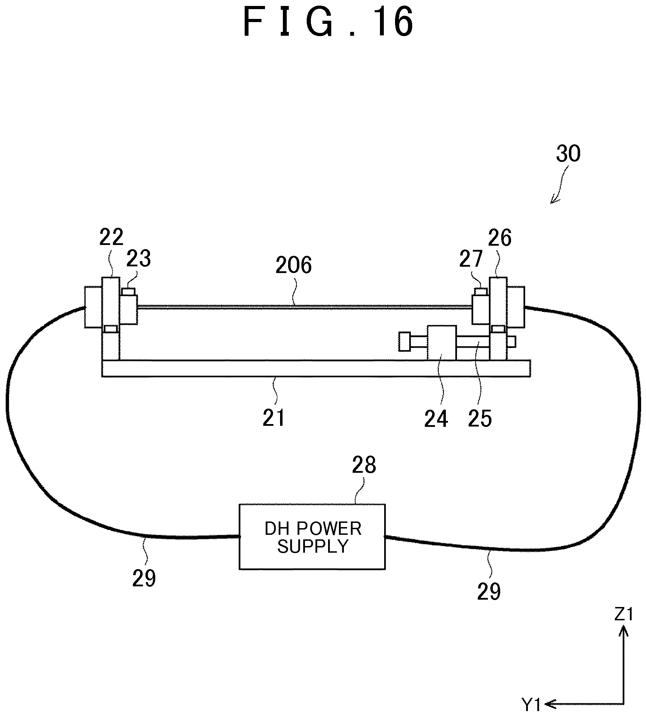

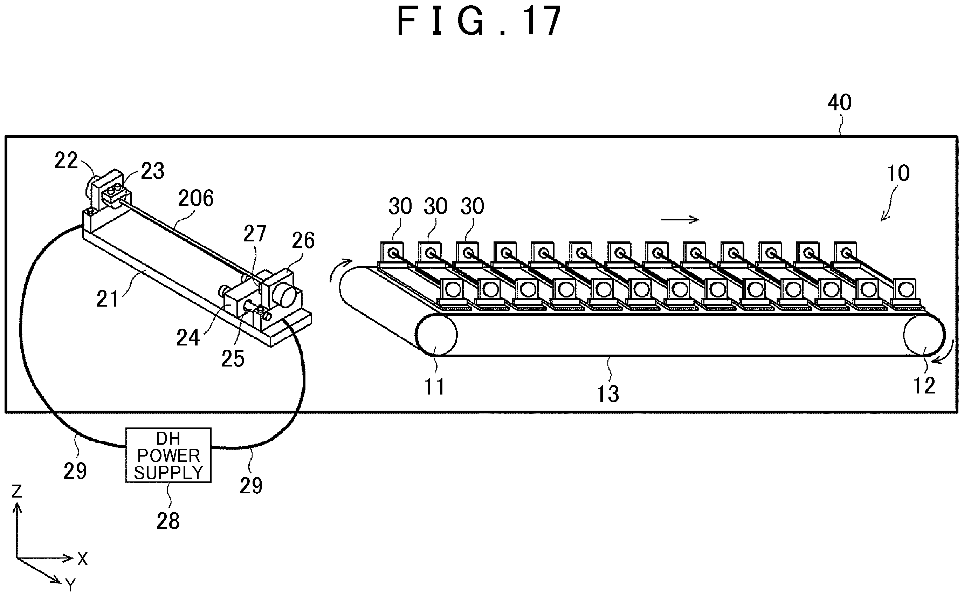

Next, a manufacturing method of a coated conducting wire assembly according to a second example embodiment of the invention will be described with reference to FIGS. 15 to 17. FIG. 15 is a flowchart illustrating steps in the manufacturing method of the coated conducting wire assembly according to the second example embodiment. FIG. 16 is a front view of a clamp unit used in one of the steps in the manufacturing method of the coated conducting wire assembly according to the second example embodiment. FIG. 17 is a view showing one of the steps in the manufacturing method of the coated conducting wire assembly according to the second example embodiment. The manufacturing method of the coated conducting wire assembly according to the second example embodiment has the same steps as the manufacturing method of the coated conducting wire assembly according to the first example embodiment, except that an annealing step S213 is performed instead of the annealing step S13.

First, the steps from the single wire rolling step S1 to the stripping step S12 are performed just as they are in the manufacturing method of the coated conducting wire assembly according to the first example embodiment.

Then, the partially coated conducting wire assembly 206 is heated to the annealing temperature while tension is applied, and is then kept at this annealing temperature for a predetermined period of time (annealing step S213).

More specifically, first, tension is applied to the partially coated conducting wire assembly 206 using a clamp unit 30 (clamping step S2131), as shown in FIG. 16. The clamp unit 30 has the same structure as the clamp unit 20, except that it includes a DH (Direct resistance Heating) power supply 28 and a conducting wire 29. The DH power supply 28 of the clamp unit 30 is detachably connected to the clamps 23 and 27 via the clamp supporting portions 22 and 26, and the conducting wire 29. The conducting wire 29 is electrically connected to one end portion and the other end portion of the partially coated conducting wire assembly 206. The DH power supply 28 supplies current to the partially coated conducting wire assembly 206 via the conducting wire 29. Tension is applied to the partially coated conducting wire assembly 206 by clamping both end portions of the partially coated conducting wire assembly 206 with the clamps 23 and 27 of the clamp unit 30, just as in the clamping step S131.

Continuing on, the partially coated conducting wire assembly 206 is heated by direct resistance heating (direct resistance heating step S2132). More specifically, current is supplied to the partially coated conducting wire assembly 206 by the DH power supply 28, and Joule heat is generated inside the partially coated conducting wire assembly 206, e.g., in the conducting wire assembly 206b. As a result, the temperature of the partially coated conducting wire assembly 206 rises to the annealing temperature or close thereto. When heating is performed from outside the partially coated conducting wire assembly 206, as with heating by the annealing furnace 40 (see FIG. 12) in the furnace heating and holding step S132 described above, the insulation coating 206a acts as thermal insulating material, so heat is not easily transmitted to the contact portion between the conducting wire assembly 206b and the insulation coating 206a. Therefore, when heating by direct resistance heating in the direct resistance heating step S2132, a tremendous amount of heat tends to be generated in a short period of time in the object to be heated, compared to when heating by the annealing furnace 40 (see FIG. 12) in the furnace heating and holding step S132. Therefore, the temperature of the partially coated conducting wire assembly 206 is able to be raised to the annealing temperature in a short period of time. The direct resistance heating step S2132 may be performed inside the furnace chamber of the annealing furnace 40 or outside the furnace chamber of the annealing furnace 40.

Finally, as shown in FIG. 17, the partially coated conducting wire assembly 206 is put, clamp unit 30 and all, into the annealing furnace 40, and then heated and held (furnace heating and holding step S2133). More specifically, the DH power supply 28 and the conducting wire 29 are removed from the clamp supporting portions 22 and 26. Then, the clamp unit 30 that clamps the partially coated conducting wire assembly 206 is placed on a conveyer 10 that is arranged inside the annealing furnace 40, similar to the furnace heating and holding step S132. The conveyer 10 rotates the rotating rollers 11 and 12 in the same direction to move the belt 13, while the partially coated conducting wire assembly 206 is kept at the annealing temperature by the annealing furnace 40. As a result, a plurality of the clamp units 30 are able to pass through the annealing furnace 40, so annealing is able to be applied continuously to the plurality of partially coated conducting wire assemblies 206. The clamp unit 30 that clamps the partially coated conducting wire assembly 206 may also be placed on the conveyer 10 that is arranged inside the annealing furnace 40, while the DH power supply 28 and the conducting wire 29 are attached to the clamp supporting portions 22 and 26, as necessary.

Upon completion of the direct resistance heating step S2132, the one end portion and the other end portion of the partially coated conducting wire assembly 206 are often at a low temperature because they tend not to rise in temperature as easily as the other portions. One reason for this is that the heat capacity of the clamp supporting portions 22 and 26 and the clamps 23 and 27 is larger than the heat capacity of the partially coated conducting wire assembly 206. In the furnace heating and holding step S2133, the annealing furnace 40 heats the partially coated conducting wire assembly 206 and the clamp unit 30 evenly, so every portion of the partially coated conducting wire assembly 206 is able to be evenly heated and held. The furnace heating and holding step S2133 can be omitted if twisting deformation is sufficiently corrected by the direct resistance heating step S2132 alone.

According to the manufacturing method of the coated conducting wire assembly according to the second example embodiment described above, a coated conducting wire assembly in which twisting deformation has been corrected is able to be manufactured with high productivity by raising the temperature to the annealing temperature by direct resistance heating.

### (Examples)

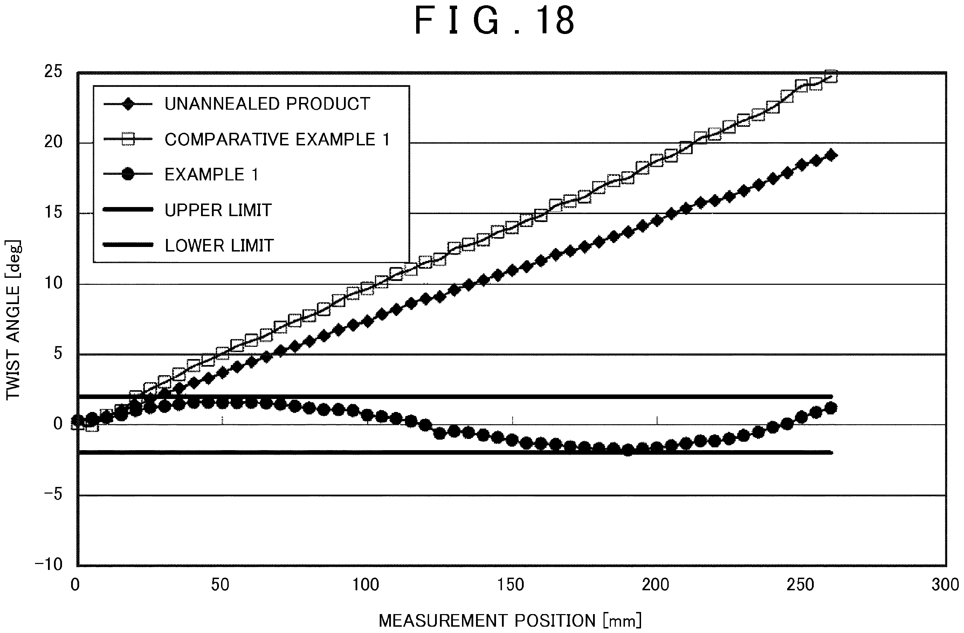

Next, examples in which conducting wire assemblies were manufactured using the manufacturing method of the coated conducting wire assembly according to the first example embodiment will be described with reference to FIG. 18. FIG. 18 is a graph showing the twisting angle with respect to a measurement position.

In Example 1, a conducting wire assembly was manufactured using the manufacturing method of the coated conducting wire assembly according to the first example embodiment. In Comparative example 1, a conducting wire assembly was manufactured using a manufacturing method having the same steps as the manufacturing method of the coated conducting wire assembly according to the first example embodiment, except for the annealing step S13. More specifically, in a step in the Comparative example 1 that corresponds to the annealing step S13, annealing was performed by heating and holding the conducting wire assembly as it is using an annealing furnace, without applying tension using a clamp unit or the like.

In Example 1, the twisting angle of the partially coated conducting wire assembly was measured after the stripping step S12 was complete but before the annealing step was started. Hereinafter, the partially coated conducting wire assembly will be referred to as an "unannealed product". Also, the twisting angle in Example 1 and the twisting angle in Comparative example 1 were measured. The measurement results are shown in FIG. 18. The measurement position is the distance from one end to the other end of the coated conducting wire assembly. A suitable range for the twisting angle is an upper limit of +2 degrees and a lower limit of -2 degrees. When the twisting angle is within this suitable range, the conducting wire assembly is able to be assembled to a motor or the like with good accuracy.

As shown in FIG. 18, in Example 1, the twisting angle was small compared to the twisting angle of the unannealed product. In Example 1, the twisting angle decreased due to the annealing step S13. Also in Example 1, the twisting angle is within the suitable range for the twisting angle throughout all parts. Therefore, the conducting wire assembly of Example 1 is able to be assembled to a motor or the like with good accuracy.

On the other hand, in Comparative example 1, the twisting angle was large compared to the twisting angle of the unannealed product. In Comparative example 1, the twisting angle is thought to have increased due to the step corresponding to the annealing step S13 described above.

### (Test example)

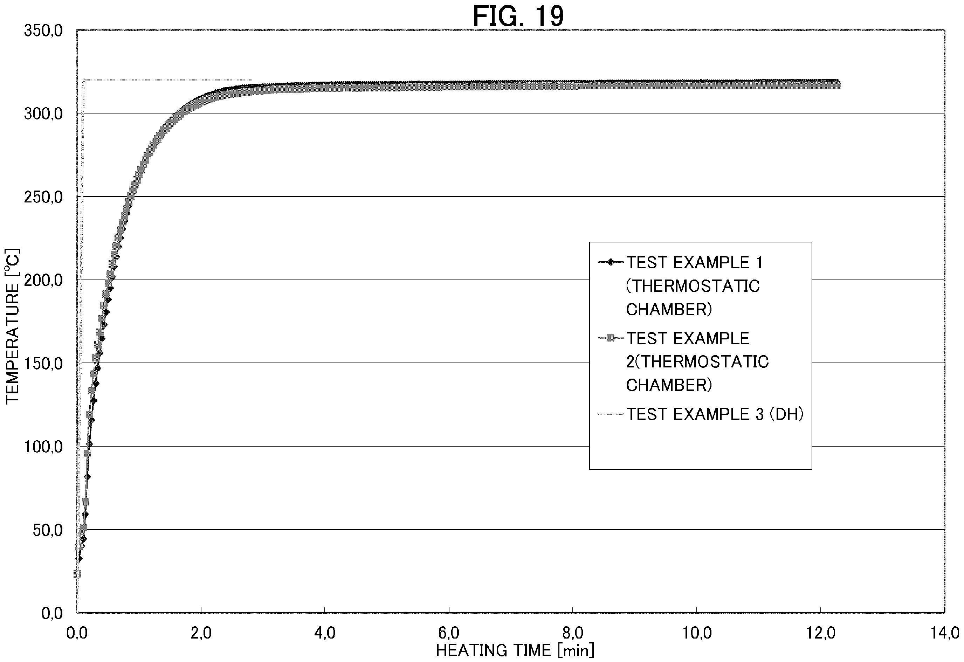

Next, test examples will be described with reference to FIG. 19. FIG. 19 is a graph illustrating temperature with respect to heating time.

In Test example 1, a conducting wire assembly having the same structure as the partially coated conducting wire assembly 206 (see FIG. 10) without the insulation coating 206a was heated and held using a thermostatic chamber. The thermostatic chamber is able to heat an object to be heated that is arranged inside the thermostatic chamber, by generating heated air. The conducting wire assembly was then heated. This heated and held conducting wire assembly that lacks an insulation coating has the same structure as the conducting wire assembly 206b, and is made from a plurality of copper wires. Also, the annealing temperature was approximately 320°C.

Also, in Test example 2, a conducting wire assembly that has the same structure as the partially coated conducting wire assembly 206 (see FIG. 10) was heated and held using a thermostatic chamber, not shown, just as in Test example 1. This heated and held conducting wire assembly includes a conducting wire assembly that is made from a plurality of copper wires, and an insulation coating made of fluorine resin. Also, the annealing temperature here was approximately 320°C.

Moreover, in Test example 3, a conducting wire assembly that has the same structure as the partially coated conducting wire assembly 206 (see FIG. 10) was heated by direct resistance heating, just as in the direct resistance heating step S2132 (see FIG. 15) in the manufacturing method according to the second example embodiment. This heated and held conducting wire assembly includes a conducting wire assembly that is made from a plurality of copper wires, and an insulation coating made of fluorine resin. Also, the annealing temperature here was approximately 320°C.

Heating in Text examples 1 to 3 was started, and, after reaching the annealing temperature, the temperatures of the conducting wire assemblies were measured at least until the temperatures stabilized. These measurement results are shown in FIG. 19.

In Test examples 1 and 2, approximately two minutes passed until the temperatures of the conducting wire assemblies reached the annealing temperature. On the other hand, in Test example 3, approximately 0.1 minute passed until the temperature of the conducting wire assembly reached the annealing temperature. Therefore, the elapsed time until the temperature of the conducting wire assembly reached the annealing temperature was shorter in Test example 3 than it was in Test examples 1 and 2. That is, the rate of temperature increase in Test example 3 was faster than the rates of temperature increase in Test examples 1 and 2. One reason for this is that direct resistance heating generates Joule heat in the conducting wire assembly, so there is a tendency for the temperature to rise more rapidly compared to heating with a thermostatic chamber or an annealing furnace.

The invention is not limited to the example embodiments described above. That is, suitable modifications within the scope of the invention are also possible. For example, with the manufacturing method of a conducting wire assembly according to the first and second example embodiments, the steps from the cutting step S10 to the annealing step S13 are performed, but an annealing step S313 may be performed instead of the steps from the cutting step S10 to the annealing step S13. The annealing step S313 may be performed using an annealing apparatus 50 shown in FIG. 20. The annealing apparatus 50 includes a furnace chamber 51, a holding base 52, two roller supporting portions 53 provided one on each end portion of the holding base 52, and two rollers 54 that are rotatably supported by the roller supporting portions 53, respectively. Each of the two rollers 54 is provided with technical means that enables it to rotate, rotate in reverse, and stop. An end portion of the partially coated conducting wire assembly 206 is wound around each of the two rollers 54. Tension is applied to the partially coated conducting wire assembly 206 by the rollers 54 rotating in opposite directions. Here, tension is applied such that the partially coated conducting wire assembly 206 extends out straight. The other end portion of the partially coated conducting wire assembly 206 is preferably prevented from twisting with respect to the one end portion of the partially coated conducting wire assembly 206. In other words, the twisting angle, i.e., the angle of the other end portion of the partially coated conducting wire assembly 206 with respect to the one end portion of the partially coated conducting wire assembly 206, is preferably 0° (zero degrees). Annealing may be performed by heating and holding the furnace chamber 51. Also, according to this kind of manufacturing method of a conducting wire assembly, annealing may be performed even if the steps from the cutting step S10 to the stripping step S12 are omitted. Tension may also be applied to the partially coated conducting wire assembly 206 by providing a mechanism that moves at least one of the roller supporting portions 53, and changing the distance between the roller supporting portions 53 while rotation of the rollers 54 is stopped.

Also, with the manufacturing method of a conducting wire assembly according to the first and second example embodiments, the steps from the single wire rolling step S1 to the annealing step S13 and S132 are performed, but at least one of the steps from the single wire rolling step S1 to the annealing step S13 and S132 may be omitted as necessary. Also, with the manufacturing method of a conducting wire assembly according to the first and second example embodiments, annealing is performed while tension is applied, but tension may be applied at the same time that annealing starts or after annealing has started.

## Claims

1. A manufacturing method of a coated conducting wire assembly, comprising:
forming a conducting wire assembly by twist-deforming a conducting wire bundle (200), the conducting wire bundle (200) being formed by bundling a plurality of conducting wires (199), the conducting wire assembly including a parallel portion (201a), a left-wound portion (201b), and a right-wound portion (201c); and
forming a coated conducting wire assembly by covering the conducting wire assembly with an insulation coating;
**characterized by**
annealing the coated conducting wire assembly, the annealing being heating and holding the coated conducting wire assembly at an annealing temperature, while applying tension to the covered conducting wire assembly.

2. The manufacturing method according to claim 1, wherein
the coated conducting wire assembly includes a conducting portion where the conducting wire assembly is exposed, on both ends; and
the annealing includes heating the coated conducting wire assembly to raise a temperature of the coated conducting wire assembly to the annealing temperature, the heating being performed by direct resistance heating by supplying a current to the conducting portion of the coated conducting wire assembly.

3. The manufacturing method according to claim 1 or 2, wherein
the annealing includes applying tension to the coated conducting wire assembly, while both end portions of the coated conducting wire assembly are fixed such that an angle of twist from untwisting deformation becomes substantially zero, the untwisting deformation being caused by return deformation that occurs as the coated conducting wire assembly is formed.

4. The manufacturing method according to any one of claims 1 to 3, further comprising:
shortening the coated conducting wire assembly by cutting the coated conducting wire assembly before the annealing.

5. The manufacturing method according to claim 4, wherein
the shortened coated conducting wire assembly (205) includes an outer coating (205a);
a partially coated conducting wire assembly (206) is formed by cutting and stripping both end portions of the shortened coated conducting wire assembly (205); and
the partially coated conducting wire assembly (206) is annealed.

6. The manufacturing method according to any one of claims 1 to 5, wherein the forming of the conducting wire assembly includes:
forming a twisted assembly conductor (201) by twist-deforming a conducting wire bundle (200), the conducting wire bundle (200) being formed by bundling a plurality of conducting wires (199); and
forming a first assembly conductor (202) by applying pressure to the twisted assembly conductor (201), the first assembly conductor (202) including a core wire (132) and peripheral wires (112).

7. The manufacturing method according to any one of claim 6, wherein the forming of the coated conducting wire assembly includes:
forming a second assembly conductor (203) by forming an oxide film between the core wire (132) and the peripheral wires (112), as well as between the peripheral wires (112); and
coating the insulation coating (204a) onto the second assembly conductor (203).

## Patentansprüche

1. Herstellungsverfahren für einen beschichteten Leitungsdrahtaufbau, das Folgendes umfasst:
Ausbilden eines Leitungsdrahtaufbaus durch Drillverformen eines Leitungsdrahtbündels (200), wobei das Leitungsdrahtbündel (200) durch Bündeln einer Vielzahl von Leitungsdrähten (199) ausgebildet ist und der Leitungsdrahtaufbau einen parallelen Abschnitt (201a), einen linksgewundenen Abschnitt (201b) und einen rechtsgewundenen Abschnitt (201c) aufweist; und
Ausbilden eines beschichteten Leitungsdrahtaufbaus durch Bedecken des Leitungsdrahtaufbaus mit einer Isolierbeschichtung,
**gekennzeichnet durch**
Tempern des beschichteten Leitungsdrahtaufbaus, wobei das Tempern Erwärmen und Halten des beschichteten Leitungsdrahtaufbaus bei einer Tempertemperatur ist, während auf den bedeckten Leitungsdrahtaufbau Zug aufgebracht wird.

2. Herstellungsverfahren nach Anspruch 1, wobei
der beschichtete Leitungsdrahtaufbau an beiden Enden einen leitenden Abschnitt aufweist, wo der Leitungsdrahtaufbau freiliegt; und
das Tempern Erwärmen des beschichteten Leitungsdrahtaufbaus beinhaltet, um eine Temperatur des beschichteten Leitungsdrahtaufbaus auf die Tempertemperatur zu erhöhen, wobei das Erwärmen durch direkte Widerstandserwärmung vollzogen wird, indem dem leitenden Abschnitt des beschichteten Leitungsdrahtaufbaus ein Strom zugeführt wird.

3. Herstellungsverfahren nach Anspruch 1 oder 2, wobei
das Tempern beinhaltet, auf den beschichteten Leitungsdrahtaufbau Zug aufzubringen, während beide Endabschnitte des beschichteten Leitungsdrahtaufbaus derart fixiert werden, dass ein Verdrehwinkel durch eine Aufdrehverformung im Wesentlichen null wird, wobei die Aufdrehverformung durch eine Rückverformung verursacht wird, die auftritt, wenn der beschichtete Leitungsdrahtaufbau ausgebildet wird.

4. Herstellungsverfahren nach einem der Ansprüche 1 bis 3, das außerdem Folgendes umfasst:
Verkürzen des beschichteten Leitungsdrahtaufbaus, indem der beschichtete Leitungsdrahtaufbau vor dem Tempern geschnitten wird.

5. Herstellungsverfahren nach Anspruch 4, wobei
der verkürzte beschichtete Leitungsdrahtaufbau (205) eine äußere Beschichtung (205a) aufweist;
ein teilweise beschichteter Leitungsdrahtaufbau (206) ausgebildet wird, indem beide Endabschnitte des verkürzten beschichteten Leitungsdrahtaufbaus (205) geschnitten und abisoliert werden; und
der teilweise beschichtete Leitungsdrahtaufbau (206) getempert wird.

6. Herstellungsverfahren nach einem der Ansprüche 1 bis 5, wobei das Ausbilden des Leitungsdrahtaufbaus Folgendes beinhaltet:
Ausbilden eines Leiters verdrillten Aufbaus (201) durch Drillverformen eines Leitungsdrahtbündels (200), wobei das Leitungsdrahtbündel (200) durch Bündeln einer Vielzahl von Leitungsdrähten (199) ausgebildet ist; und
Ausbilden eines Leiters ersten Aufbaus (202) durch Aufbringen von Druck auf den Leiter verdrillten Aufbaus (201), wobei der Leiter ersten Aufbaus (202) einen Kerndraht (132) und periphere Drähte (112) aufweist.

7. Herstellungsverfahren nach einem von Anspruch 6, wobei das Ausbilden des beschichteten Leitungsdrahtaufbaus Folgendes beinhaltet:
Ausbilden eines Leiters zweiten Aufbau (203) durch Ausbilden eines Oxidfilms zwischen dem Kerndraht (132) und den peripheren Drähten (112) sowie zwischen den peripheren Drähten (112); und
Aufbringen der Isolierbeschichtung (204a) auf den Leiter zweiten Aufbaus (203).

## Revendications

1. Procédé de fabrication d'un ensemble de fils conducteurs revêtus, qui comprend :
la formation d'un ensemble de fils conducteurs en déformant par torsion un faisceau de fils conducteurs (200), dans lequel le faisceau de fils conducteurs (200) est formé en groupant une pluralité de fils conducteurs (199), dans lequel l'ensemble de fils conducteurs comprend une partie parallèle (201a), une partie enroulée à gauche (201b), et une partie enroulée à droite (201c) ; et
la formation d'un ensemble de fils conducteurs revêtus en recouvrant l'ensemble de fils conducteurs d'un revêtement d'isolement ;
**caractérisé par**
le recuit de l'ensemble de fils conducteurs revêtus, dans lequel le recuit consiste à chauffer et à maintenir l'ensemble de fils conducteurs revêtus à une température de recuit, tout en appliquant une tension à l'ensemble de fils conducteurs revêtus.

2. Procédé de fabrication selon la revendication 1, dans lequel
l'ensemble de fils conducteurs revêtus comprend une partie conductrice où l'ensemble de fils conducteurs est exposé, aux deux extrémités ; et
le recuit comprend le chauffage de l'ensemble de fils conducteurs revêtus pour élever une température de l'ensemble de fils conducteurs revêtus à la température de recuit, dans lequel le chauffage est effectué par un chauffage direct par résistance en fournissant un courant à la partie conductrice de l'ensemble de fils conducteurs revêtus.

3. Procédé de fabrication selon la revendication 1 ou 2, dans lequel
le recuit comprend l'application d'une tension à l'ensemble de fils conducteurs revêtus, alors que les deux parties d'extrémité de l'ensemble de fils conducteurs revêtus sont fixées de sorte qu'un angle de torsion provenant d'une déformation de détorsion devienne sensiblement nul, dans lequel la déformation de détorsion est provoquée par une déformation de retour qui se produit alors que l'ensemble de fils conducteurs revêtus est formé.

4. Procédé de fabrication selon l'une quelconque des revendications 1 à 3, qui comprend en outre :
le raccourcissement de l'ensemble de fils conducteurs revêtus en coupant l'ensemble de fils conducteurs revêtus avant le recuit.

5. Procédé de fabrication selon la revendication 4, dans lequel
l'ensemble de fils conducteurs revêtus raccourci (205) comprend un revêtement extérieur (205a) ;
un ensemble de fils conducteurs partiellement revêtus (206) est formé en coupant et dénudant les deux parties d'extrémité de l'ensemble de fils conducteurs revêtus raccourci (205) ; et
l'ensemble de fils conducteurs partiellement revêtus (206) est recuit.

6. Procédé de fabrication selon l'une quelconque des revendications 1 à 5, dans lequel la formation de l'ensemble de fils conducteurs comprend :
la formation d'un ensemble conducteur torsadé (201) en déformant par torsion un faisceau de fils conducteurs (200), dans lequel le faisceau de fils conducteurs (200) est formé en groupant une pluralité de fils conducteurs (199) ; et
la formation d'un premier ensemble conducteur (202) en appliquant une pression à l'ensemble conducteur torsadé (201), dans lequel le premier ensemble conducteur (202) comprend une âme (132) et des fils périphériques (112).

7. Procédé de fabrication selon la revendication 6, dans lequel la formation de l'ensemble de fils conducteurs revêtus comprend :
la formation d'un deuxième ensemble conducteur (203) en formant un film d'oxyde entre l'âme (132) et les fils périphériques (112), ainsi qu'entre les fils périphériques (112) ; et
le dépôt du revêtement d'isolement (204a) sur le deuxième ensemble conducteur (203).
